# EUROPÄISCHE PATENTSCHRIFT

(11) **EP 2 474 730 B1**
(45) Veröffentlichungstag und Bekanntmachung des Hinweises auf die Patenterteilung: **25.06.2014**
(21) Anmeldenummer: 12002461.7
(22) Anmeldetag: 31.01.2008
(51) Int. Cl.: F02G 5/00, F16D 57/00

(54) **Fahrzeugantriebsstrang mit einem Retarder und einer Expansionsmaschine**
Vehicle powertrain with a retarder and an expansion machine
Conducteur de commande de véhicule avec un retardateur et une machine d'expansion

(30) Priorität: 05.02.2007 DE 102007006420
(43) Veröffentlichungstag der Anmeldung: 11.07.2012
(62) Teilanmeldung aus: 08707463.9
(73) Patentinhaber: SteamDrive GmbH, 89522 Heidenheim (DE)
(72) Erfinder: Bartosch, Stephan, 89192 Rammingen (DE); Pittius, Dr. Reinhold, 74564 Crailsheim (DE)
(74) Vertreter: Schmidt, Sven Hendrik

(56) Entgegenhaltungen:
- DE-A1- 2 203 319
- DE-C1- 19 716 299
- JP-A- 59 221 409
- JP-A- 60 139 538

## Beschreibung

Die Erfindung betrifft einen Fahrzeugantriebsstrang, insbesondere eines Lkw, Personenkraftwagens, Schienenfahrzeugs oder sonstigen Kraftfahrzeugs, welcher einen hydrodynamischen Retarder zum hydrodynamischen Abbremsen des Fahrzeugs und eine Expansionsmaschine zum Antreiben des Fahrzeugs, das heißt zur Traktion, oder zum Antrieben eines Aggregates, insbesondere Nebenaggregates, des Fahrzeugs beziehungsweise des Fahrzeugantriebsstrangs aufweist.

Antriebsstränge, in denen sowohl ein hydrodynamischer Retarder als auch eine dampfgetriebene Expansionsmaschine angeordnet ist, werden in den Patentschriften US 5 121 607, US 5 241 817 und US 5 195 881 beschrieben. Der hydrodynamische Retarder ist innerhalb eines Getriebes (CVT) angeordnet und läuft in Abhängigkeit der Fahrzeuggeschwindigkeit um. Ferner ist sekundärseitig, das heißt auf einem Nebenabtrieb des Getriebes parallel zur Getriebeabtriebswelle eine Expansionsmaschine vorgesehen, welche als Kompressor verwendet werden kann, um das Fahrzeug abzubremsen. Im Kompressorbetrieb läuft die Expansionsmaschine ebenfalls fahrzeuggeschwindigkeitsabhängig um. Die Expansionsmaschine ist über eine Trennkupplung im Getriebe zu- und abschaltbar.

Obwohl die beschriebenen Fahrzeugantriebsstränge sowohl eine Expansionsmaschine als auch einen hydrodynamischen Retarder aufweisen, werden diese beiden Aggregate vollkommen unabhängig voneinander betrieben, benötigen jeweils einen eigenen erheblichen Bauraum im und außen am Getriebe und benötigen ferner jeweils einen eigenen Wärmetauscher, um Wärme aus den beiden getrennt zueinander vorgesehenen Arbeitsmediumkreisläufen an die Umgebung abzuführen. Somit ist der bauliche und energetische Aufwand für den vorgeschlagenen Fahrzeugantriebsstrang derart intensiv, dass sich diese Ausführungsform in der Praxis bisher nicht durchsetzen konnte.

JP-60139538 beschreibt einen elektrischen Retarder, dessen Lastwiderstand im Arbeitsmediumkreislauf einer Expansionsmaschine positioniert ist.

Der vorliegenden Erfindung liegt die Aufgabe zugrunde, den beschriebenen Fahrzeugantriebsstrang derart weiterzuentwickeln, dass seine Herstellung und sein Betrieb kostengünstiger und energetisch günstiger möglich ist und über die einfache Kombination von zwei bekannten Aggregaten hinaus eine Mehrleistung für den Fahrzeugantriebsstrang beziehungsweise beim Betriebs desselben erzielt wird. Der erfindungsgemäße Fahrzeugantriebsstrang soll möglichst kompakt ausgeführt sein.

Die erfindungsgemäße Aufgabe wird durch einen Fahrzeugantriebsstrang mit den Merkmalen von Anspruch 1 gelöst. In den abhängigen Ansprüchen sind vorteilhafte und besonders zweckmäßige Ausgestaltungen der Erfindung angegeben.

Im Einzelnen weist ein erfindungsgemäßer Fahrzeugantriebsstrang gemäß Anspruch 1 die folgenden Merkmale auf:
- einen hydrodynamischen Retarder, der einen Rotor und einen Stator oder einen Rotor und einen Gegenlaufrotor aufweist, die miteinander einen Arbeitsraum ausbilden, in welchem eine Kreislaufströmung eines Arbeitsmediums einstellbar ist, um Drehmoment vom Rotor hydrodynamisch auf den Stator oder den Gegenlaufrotor zu übertragen, oder
- einen dynamischen Retarder, der einen Rotor und einen Stator oder einen Rotor und einen Gegenlaufrotor aufweist, um Drehmoment vom Rotor durch Magnetkraft, elektrodynamisch, durch eine Flüssigkeitsreibung oder mechanische Reibung zu übertragen, wobei die Drehmomentübertragung oder eine Wärmeabfuhr aus dem Retarder durch ein Arbeitsmedium erfolgt;
- eine mit Fluid oder Dampf als Arbeitsmedium betriebene Expansionsmaschine, mittels welcher mechanische Antriebsleistung in den Antriebsstrang einspeisbar ist;
   dadurch gekennzeichnet, dass
- das Arbeitsmedium des Retarders zugleich das Arbeitsmedium der Expansionsmaschine ist und derart durch die Expansionsmaschine geleitet wird, dass die im Retarders in das Arbeitsmedium eingebrachte Wärmemenge in der Expansionsmaschine in mechanische Energie umgewandelt wird, oder
- der Retarder und die Expansionsmaschine jeweils einen eigenen Arbeitsmediumkreislauf aufweisen, wobei die Arbeitsmediumkreisläufe hinsichtlich der Arbeitsmediumführung voneinander getrennt sind, jedoch in einer wärmbeübertragenden Verbindung miteinander stehen, indem ein Wärmetauscher vorgesehen ist, durch welchen das Arbeitsmedium des Retarders und das Arbeitsmedium der Expansionsmaschine geleitet werden, um die im Retarders in das Arbeitsmedium eingebrachte Wärmemenge in der Expansionsmaschine in mechanische Energie umzuwandeln; wobei
- im Arbeitsmediumkreislauf der Expansionsmaschine ein Speicher zur Speicherung von erhitztem Arbeitsmedium vorgesehen ist.

Der erfindungsgemäße Fahrzeugantriebsstrang weist einen hydrodynamischen Retarder auf. Der Retarder ist entweder mit einem stationären, das heißt nicht umlaufenden, eine Beschaufelung tragenden Stator und einem umlaufenden beschaufelten Rotor versehen, welche miteinander einen insbesondere torusförmigen Arbeitsraum ausbilden, oder als Gegenlaufretarder ausgeführt. Im letzteren Fall weist der Retarder nicht nur einen sondern wenigstens zwei beschaufelte Rotoren auf, vorliegend als Rotor und Gegenlaufrotor bezeichnet, welche im Retarderbetrieb gegensinnig zueinander, das heißt mit einer relativ entgegengesetzt zueinander gerichteten Drehrichtung umlaufen. Der Arbeitsraum des Retarders, der durch den Rotor und den Stator beziehungsweise den Rotor und den Gegenlaufrotor gebildet wird, ist entweder stets mit Arbeitsmedium befüllt oder wahlweise mit Arbeitsmedium befüllbar. Bei stets mit Arbeitsmedium befülltem Arbeitsraum ist der gesamte Retarder über eine Trennkupplung vom Fahrzeugantriebsstrang, insbesondere einem Getriebe im Fahrzeugantriebsstrang abkuppelbar oder es sind andere Maßnahmen, wie beispielsweise das freie Umlaufen beziehungsweise freie Mitschleppen des Stators oder Gegenlaufrotors, um das Ausüben eines Bremsmomentes zu vermeiden, vorgesehen. Bei einem wahlweise mit Arbeitsmedium befüll- und entleerbaren Arbeitsraum des Retarders kann das Einschalten und Ausschalten durch Befüllen und Entleeren des Arbeitsraumes erfolgen.

Anstelle des hydrodynamischen Retarders oder zusätzlich zu dem hydrodynamischen Retarder kann auch ein anderer dynamischer Retarder vorgesehen sein, bei welchem ein Drehmoment von einem Rotor auf einen Stator oder von einem Rotor auf einen Gegenlaufrotor übertragen wird. Die Drehmomentübertragung kann beispielsweise durch Flüssigkeitsreibung eines zwischen Rotor und Stator beziehungsweise Rotor und Gegenlaufrotor eingebrachten Arbeitsmediums beziehungsweise durch Scherkräfte in diesem Arbeitsmedium erfolgen. Alternativ oder zusätzlich kann die Drehmomentübertragung durch eine elektrodynamische Kraft oder eine Magnetkraft erfolgen. Schließlich ist auch eine Drehmomentübertragung durch mechanische Reibung möglich. Andere Übertragungsmöglichkeiten sind vorstellbar. Dieser dynamische Retarder kann zusätzlich oder alternativ ein Arbeitsmedium aufweisen beziehungsweise von einem solchen durchströmt sein, das zur Wärmeabfuhr von im Retarder entstehender Wärme dient.

Im Antriebsstrang ist ferner eine Expansionsmaschine vorgesehen, welche mit einem Fluid oder Dampf als Arbeitsmedium betrieben wird, um durch Expansion des Arbeitsmediums mechanische Arbeit beziehungsweise Leistung zu erzeugen. Diese mechanische Leistung kann in den Antriebsstrang zur Traktion des Fahrzeugs eingespeist werden, oder ein Aggregat, insbesondere Nebenaggregat, des Antriebsstrangs beziehungsweise des Fahrzeugs wird mittels der Expansionsmaschine angetrieben, beispielsweise eine Pumpe, ein elektrischer Generator, ein Kompressor oder dergleichen.

Die Expansionsmaschine, auch Expander genannt, kann insbesondere als Kolbenmaschine, Schraubenmaschine oder Turbomaschine beziehungsweise Turbine ausgeführt sein. Bei Ausführung als Schraubenmaschine sind insbesondere zwei miteinander kämmende schraubenförmige Rotoren vorgesehen, welche durch einen gegenseitigen Eingriff ineinander einen oder mehrere Arbeitsräume beziehungsweise Expansionsräume abdichten und durch die Expansion des Arbeitsmediums in dem oder den Expansionsräumen in Umlauf versetzt werden.

Gemäß einer erfindungsgemäßen Ausführungsform stehen der Rotor und/oder der Gegenlaufrotor des Retarders und die Expansionsmaschine, insbesondere eine Antriebswelle oder ein Laufrad derselben, in einer Triebverbindung miteinander oder sind wahlweise in eine solche schaltbar. Somit ist es besonders leicht möglich, einen bestehenden Fahrzeugantriebsstrang mit einem Retarder, insbesondere Primärretarder oder Sekundärretarder, mit einer Expansionsmaschine nachzurüsten, wobei die Expansionsmaschine dieselbe Triebverbindung, insbesondere denselben Nebenabtrieb eines Getriebes nutzen kann, die herkömmlich für den Retarder vorgesehen wurde. Beispielsweise können die Expansionsmaschine und der Retarder auf einer gemeinsamen Welle angeordnet sein, mit ihren Gehäusen aneinander montiert sein oder innerhalb eines gemeinsamen Gehäuses aufgenommen sein.

Gemäß einer Ausführungsform sind die Arbeitsmediumkreisläufe von Retarder und Expansionsmaschine voneinander getrennt und entsprechend zueinander abgedichtete Kanäle oder Strömungsführungen für die beiden Arbeitsmediumkreisläufe im gemeinsamen Wärmetauscher vorgesehen. Gemäß einer alternativen Ausführungsform kann das Arbeitsmedium des Retarders zugleich das Arbeitsmedium der Expansionsmaschine sein.

Gemäß der Erfindung wird die durch den Retarder in das Arbeitsmedium des Retarders eingebrachte Wärmemenge in der Expansionsmaschine in mechanische Energie umgewandelt. Hierfür kann ein Wärmetauscher vorgesehen sein, mittels welchem die Wärme aus dem Arbeitsmedium des Retarders in das Arbeitsmedium der Expansionsmaschine übertragen wird. Ein solcher Wärmetauscher kann natürlich auch im Retarder und/oder der Expansionsmaschine integriert sein. Alternativ ist es möglich, das Arbeitsmedium zugleich als Arbeitsmedium des Retarders und als Arbeitsmedium der Expansionsmaschine zu nutzen. In beiden Fällen ist ein Speicher vorgesehen, welcher das Arbeitsmedium der Expansionsmaschine im erhitzten oder dampfförmigen Zustand speichert, um dieses später, insbesondere nach Abschalten des Retarders, zur Erzeugung von mechanischer Leistung in der Expansionsmaschine nutzen zu können. Besonders vorteilhaft ist der Speicher beheizt und/oder thermisch isoliert, um einen Wärmeverlust zu verringern oder zu vermeiden.

Bei einer mechanischen Kopplung von Retarder und Expansionsmaschine ist zwischen diesen beiden Aggregaten vorteilhaft eine Untersetzung vorgesehen - bezogen auf die Richtung des Antriebsleistungsflusses von der Expansionsmaschine zu dem Retarder -, so dass der Retarder mit einer geringeren Drehzahl umläuft als die Expansionsmaschine. Dies ist insbesondere dann günstig, wenn die Expansionsmaschine als Turbine, beispielsweise Dampfturbine, oder Schraubenexpander ausgeführt ist. Besonders günstig kann der Rotor des Retarders eine Außenverzahnung ausbilden oder eine solche tragen oder drehfest und insbesondere einteilig mit einem entsprechenden Außenzahnrad verbunden sein. Die Expansionsmaschine, die dann beispielsweise eine Antriebswelle mit einem Ritzel aufweist, kann dann derart, insbesondere axial neben dem Retarder angeordnet sein, dass das Ritzel mit der Außenverzahnung beziehungsweise dem Außenzahnrad kämmt. Somit kann vorteilhaft Antriebsleistung der Expansionsmaschine über den Rotor des Retarders, bei frei mitumlaufendem Stator und Gegenlaufrotor beziehungsweise bei entleertem Arbeitsraum des Retarders über die Antriebswelle des Retarders, in der Regel einen Nebenabtrieb im Getriebe, zur Traktion des Fahrzeugs in den Antriebsstrang beziehungsweise das Getriebe eingeleitet werden. Dieser Nebenabtrieb kann wiederum gegenüber einer Getriebeabtriebswelle (beim Sekundärretarder) oder einer Getriebeantriebswelle (beim Primärretarder) ins Schnelle übersetzt sein, damit auch der Retarderrotor mit einer höheren Drehzahl umläuft, als die Getriebeantriebswelle beziehungsweise die Getriebeabtriebswelle.

Gemäß einer Ausführungsform ist der Retarder als sogenannter Gegenlaufretarder ausgebildet, wobei im Retarderbremsbetrieb der Gegenlaufrotor aktiv durch die Expansionsmaschine angetrieben wird, um das Bremsmoment des Retarders gegenüber einer Ausführungsform mit einem Rotor und einem Stator zu erhöhen. Vorteilhaft weicht der Absolutwert der beiden Drehzahlen der Rotoren voneinander ab. Gemäß einer Ausführungsform kann die Drehzahl des Gegenlaufrotors durch Regeln der Leistungsabgabe der Expansionsmaschine, beispielsweise dadurch, dass die Arbeitsmediummenge, die durch die Expansionsmaschine geleitet wird, variiert wird, verändert werden, um das Bremsmoment zu regeln oder zu steuern.

Die Erfindung soll nachfolgend anhand von Ausführungsbeispielen exemplarisch beschrieben werden.

Es zeigen:
- Figur 1: eine Ausführungsform mit einem gemeinsamen Wärmetauscher für das Arbeitsmedium des Retarders und das Arbeitsmedium der Expansionsmaschine;
- Figur 2: eine Ausführungsform mit einer mechanischen Ankopplung der Expansionsmaschine über den Rotor des Retarders an das Getriebe eines Kraftfahrzeugs;
- Figur 3: eine Abwandlung zur der Figur 2.

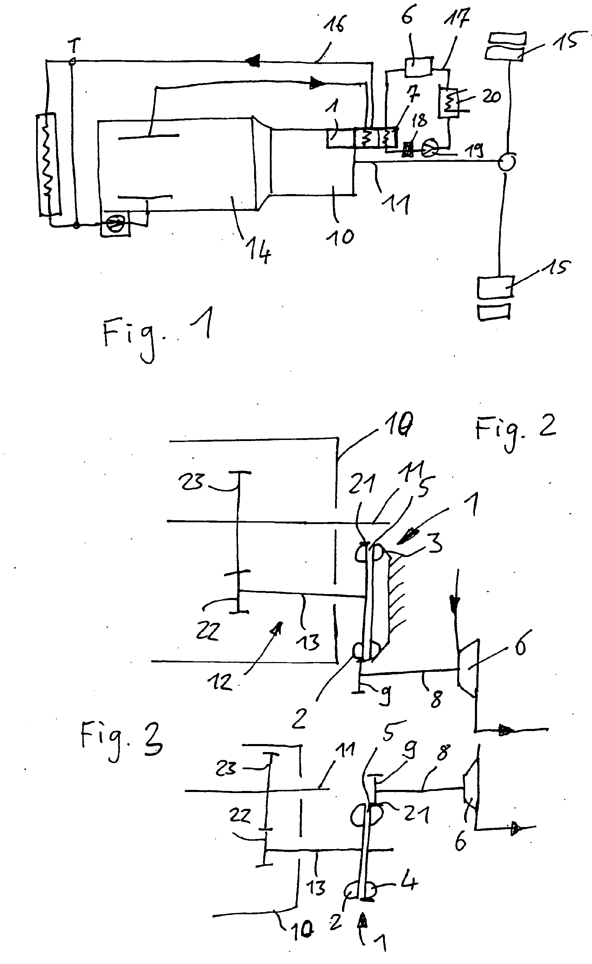

In der Figur 1 erkennt man eine Antriebsmaschine 14 eines Fahrzeugantriebsstrangs, die beispielsweise als Brennkraftmaschine, insbesondere Dieselmotor oder sonstiger Kolbenmotor ausgeführt ist. Die Antriebsmaschine 14 treibt über ein Getriebe 10 Antriebsräder 15 des Fahrzeugs an. Das Getriebe 10 kann beispielsweise als Handschaltgetriebe, automatisiertes Schaltgetriebe oder Automatgetriebe ausgeführt sein.

Auf der Abtriebsseite des Getriebes 10, das heißt entgegengesetzt zu der der Antriebsmaschine 14 zugewandten Getriebeeingangsseite mit einer Getriebeeingangswelle (nicht dargestellt), die unmittelbar von der Antriebsmaschine 14 angetrieben wird, ist im Getriebe oder - abweichend von der vorliegenden Darstellung auch außen am Getriebe - ein Retarder 1 vorgesehen, um das Fahrzeug hydrodynamisch abzubremsen. Hierzu steht der Rotor (nicht gezeigt) des Retarders 1 in einerTriebverbindung mit der Getriebeabtriebswelle 11, welche wiederum in einer Triebverbindung mit den Antriebsrädern 15 steht.

Während des Betriebszustands mit eingeschaltetem Retarder 1, das heißt während des hydrodynamischen Abbremsens des Fahrzeugs, entsteht im Arbeitsraum des Retarders Wärme, welche über einen externen Kühlmediumkreislauf 16, vorliegend den Fahrzeugkühlkreislauf, abgeführt werden muss. Hierzu ist ein Wärmetauscher 7 am Retarder 1 angeschlossen, welcher einerseits das Kühlmedium des Fahrzeugkühlkreislaufes und andererseits das Arbeitsmedium des Retarders führt, um Wärme aus dem Arbeitsmedium des Retarders in das Kühlmedium des Kühlkreislaufes zu übertragen. Das Arbeitsmedium des Retarders kann in diesem Fall beispielsweise Öl, Wasser oder ein Wassergemisch sein.

Der Wärmetauscher 7 führt zusätzlich zu dem Kühlmedium des Kühlkreislaufes und dem Arbeitsmedium des Retarders 1 das Arbeitsmedium eines Arbeitsmediumkreislaufes 17 einer Expansionsmaschine 6. Dabei wird das Arbeitsmedium der Expansionsmaschine 6 in dem Wärmetauscher 7 teilweise oder vollständig kondensiert. Weitere Komponenten des Arbeitsmediumkreislaufes 17 der Expansionsmaschine 6 sind ein Vorratsbehälter 18 für das Arbeitsmedium, eine Speisewasserpumpe 19 und ein Verdampfer 20.

Alternativ zu der gezeigten Ausführungsform ist erfindungsgemäß der Wärmetauscher 7 derart im Arbeitsmediumkreislauf 17 der Expansionsmaschine 6 eingebunden, dass Wärme aus dem Arbeitsmedium des Retarders 1 und/oder aus dem Kühlmedium des Kühlkreislaufs in das Arbeitsmedium der Expansionsmaschine 6 übertragen werden kann. In der Regel wäre der Wärmetauscher 7 dann in Strömungsrichtung hinter der Speisepumpe 19 und vor dem Dampferzeuger 20 im Arbeitsmediumkreislauf 17 der Expansionsmaschine 6 eingebunden.

Da das Arbeitsmedium des Arbeitsmediumkreislaufes 17 der Expansionsmaschine 6 zumindest hinter der Speisewasserpumpe 19 ein gewisses Druckniveau aufweist, beispielsweise von 6 - 10 bar, könnte alternativ oder zusätzlich das Arbeitsmedium der Expansionsmaschine 6 zugleich als Steuermedium für den Retarder 1 dienen. Hierzu müssten geeignete Steuerventile im Arbeitsmediumkreislauf 17 vorgesehen sein, um wiederum Steuerventile des Retarders 1 beziehungsweise im Arbeitsmediumkreislauf des Retarders 1 zu schalten oder zu steuern oder zu regeln.

Die in der Figur 1 gezeigte Expansionsmaschine 6 kann entweder zum Antreiben des Fahrzeugs an sich, das heißt zur Traktion des Fahrzeugs herangezogen werden, oder zum Antreiben eines Aggregates, insbesondere Nebenaggregates (nicht dargestellt) des Fahrzeugs dienen. Alternativ oder zusätzlich ist es auch möglich, wie eingangs dargestellt, einen Gegenlaufrotor (nicht gezeigt) des Retarders 1 mittels der Expansionsmaschine 6 anzutreiben.

In der Figur 2 erkennt man eine mögliche mechanische Ankopplung der Expansionsmaschine 6 über den Rotor 2 eines Retarders 1 an eine Getriebeabtriebswelle 11 eines Getriebes 10. In der Figur 3 ist zusätzlich die Möglichkeit schematisch dargestellt, die Expansionsmaschine 6 hydrodynamisch über einen Retarder 1, der auch als hydrodynamische Kupplung betrieben werden kann, am Getriebe 10 beziehungsweise der Getriebeabtriebswelle 11 anzukoppeln.

Diese Ausführungsform bietet den Vorteil, dass Drehschwingungen, die im Getriebe 10 auftreten können, aufgrund der drehschwingungsdämpfenden Wirkung der hydrodynamischen Kupplung nicht auf die Expansionsmaschine 6, die dann insbesondere als Turbine ausgeführt sein kann und mit einer sehr hohen Drehzahl, beispielsweise von bis zu 20.000 Umdrehungen/Minute und mehr umläuft, übertragen werden. Ferner ist es möglich, mittels der Expansionsmaschine 6 den Gegenlaufrotor 4 des Retarders 1 gegensinnig zum Rotor 2 anzutreiben, um die hydrodynamische Bremswirkung des Retarders zu erhöhen.

Bei der erstgenannten in der Figur 2 dargestellten Ausführungsform hingegen weist der Retarder 1 einen Stator 3 auf, der wahlweise oder stets ortsfest, das heißt nicht umlaufend, gehalten wird.

Bei beiden in den Figuren 2 und 3 dargestellten Ausführungsformen wird im Retarder 2 ein torusförmiger Arbeitsraum 5 durch die beiden Schaufelräder - Rotor 2 und Stator 3 beziehungsweise Rotor 2 und Gegenlaufrotor 4 - ausgebildet, welcher wahlweise mit einem Arbeitsmedium befüllbar ist. Wenn dies gewünscht ist, kann über eine Füllungsgradregelung das Bremsmoment des hydrodynamischen Retarders 1 geregelt werden. Gemäß der Ausführungsform mit einem Gegenlaufretarder (Figur 3) ist jedoch auch eine Bremsmomentregelung über eine Drehzahlanpassung der Expansionsmaschine 6 möglich.

In beiden in den Figuren 2 und 3 dargestellten Ausführungsformen weist die Expansionsmaschine 6 eine Antriebswelle 8 auf, die ein Ritzel 9 trägt. Das Ritzel 9 kämmt mit einer Außenverzahnung 21 entweder auf dem Rotor 2 oder dem Gegenlaufrotor 4 des Retarders 1. Der Rotor 2 des Retarders 1 wird über einen Nebenabtrieb 12, das heißt einen Leistungsabtrieb parallel zum Hauptabtrieb, welchen die Getriebeabtriebswelle 11 bildet, angetrieben und vorliegend unmittelbar von der Nebenabtriebswelle 13 drehfest getragen. Die Nebenabtriebswelle 13 steht über ein Ritzel 22 in einer Triebverbindung mit der Getriebeabtriebswelle 11. Vorliegend kämmt das Ritzel 22 der Nebenabtriebswelle 13 mit einem Zahnrad 23 auf der Getriebeabtriebswelle 11.

Durch die gezeigten Ausführungsformen ist der Rotor 2 des Retarders gegenüber der Getriebeabtriebswelle 11 ins Schnelle übersetzt und gegenüber der Expansionsmaschine 6 beziehungsweise der Antriebwelle 8 der Expansionsmaschine 6 ins Langsame übersetzt.

Selbstverständlich ist es möglich, die Ausführungsbeispiele gemäß der Figuren 2 und 3 mit einer Ausführungsform gemäß der Figur 1 zu verbinden oder nur einzelne Merkmale aus den gezeigten Ausführungsbeispielen herauszugreifen, um zu einer erfindungsgemäßen Ausführungsform zu gelangen.

### Bezugszeichenliste

- 1: Retarder
- 2: Rotor
- 3: Stator
- 4: Gegenlaufrotor
- 5: Arbeitsraum
- 6: Expansionsmaschine
- 7: Wärmetauscher
- 8: Antriebswelle
- 9: Ritzel
- 10: Getriebe
- 11: Getriebeabtriebswelle
- 12: Nebenabtrieb
- 13: Nebenabtriebswelle
- 14: Antriebsmaschine
- 15: Antriebsräder
- 16: Kühlmediumkreislauf
- 17: Arbeitsmediumkreislauf des Expanders
- 18: Vorratsbehälter
- 19: Speisewasserpumpe
- 20: Dampferzeuger
- 21: Außenverzahnung
- 22: Ritzel
- 23: Zahnrad

## Patentansprüche

1. Fahrzeugantriebsstrang, insbesondre eines Lkw oder Schienenfahrzeugs,
1.1 mit einem hydrodynamischen Retarder (1), der einen Rotor (2) und einen Stator (3) oder einen Rotor (2) und einen Gegenlaufrotor (4) aufweist, die miteinander einen Arbeitsraum (5) ausbilden, in welchem eine Kreislaufströmung eines Arbeitsmedium einstellbar ist, um Drehmoment vom Rotor (2) hydrodynamisch auf den Stator (3) oder den Gegenlaufrotor (4) zu übertragen, oder
mit einem dynamischen Retarder, der einen Rotor und einen Stator oder einen Rotor und einen Gegenlaufrotor aufweist, um Drehmoment vom Rotor durch Magnetkraft, elektrodynamisch, durch eine Flüssigkeitsreibung oder mechanische Reibung zu übertragen, wobei die Drehmomentübertragung oder eine Wärmeabfuhr aus dem Retarder durch ein Arbeitsmedium erfolgt;
1.2 mit einer mit Fluid oder Dampf als Arbeitsmedium betriebenen Expansionsmaschine (6), mittels welcher mechanische Antriebsleistung in den Antriebsstrang einspeisbar ist;
**dadurch gekennzeichnet, dass**
1.3 das Arbeitsmedium des Retarders (1) zugleich das Arbeitsmedium der Expansionsmaschine (6) ist und derart durch die Expansionsmaschine (6) geleitet wird, dass die im Retarders (1) in das Arbeitsmedium eingebrachte Wärmemenge in der Expansionsmaschine (6) in mechanische Energie umgewandelt wird, oder
1.4 der Retarder (1) und die Expansionsmaschine (6) jeweils einen eigenen Arbeitsmediumkreislauf aufweisen, wobei die Arbeitsmediumkreisläufe hinsichtlich der Arbeitsmediumführung voneinander getrennt sind, jedoch in einer wärmbeübertragenden Verbindung miteinander stehen, indem ein Wärmetauscher (7) vorgesehen ist, durch welchen das Arbeitsmedium des Retarders (1) und das Arbeitsmedium der Expansionsmaschine (6) geleitet werden,
um die im Retarders (1) in das Arbeitsmedium eingebrachte Wärmemenge in der Expansionsmaschine (6) in mechanische Energie umzuwandeln; wobei
1.5 im Arbeitsmediumkreistauf der Expansionsmaschine (6) ein Speicher zur Speicherung von erhitztem Arbeitsmedium vorgesehen ist.

2. Fahrzeugantriebsstrang gemäß Anspruch 1, **dadurch gekennzeichnet, dass** der Speicher beheizt ist.

3. Fahrzeugantriebsstrang gemäß einem der Ansprüche 1 oder 2, **dadurch gekennzeichnet, dass** der Speicher wärmeisöliert ist.

4. Fahrzeugantriebsstrang gemäß einem der Ansprüche 1 bis 3, **dadurch gekennzeichnet, dass** das Arbeitsmedium im Speicher dampfförmig ist.

5. Fahrzeugantriebsstrang gemäß einem der Ansprüche 1 bis 4, **dadurch gekennzeichnet, dass** die Expansionsmaschine (6) als Turbine, Schraubenmaschine oder Kolbenmaschine ausgeführt ist.

## Claims

1. A vehicle drive train, in particular a lorry or rail vehicle,
1.1 having a hydrodynamic retarder (1), which comprises a rotor (2) and a stator (3) or a rotor (2) and a counter-rotor (4), which form together a working chamber (5), in which a circular flow of a working medium can be induced, to transfer torque from the rotor (2) hydrodynamically to the stator (3) or to the counter-rotor (4), or having a dynamic retarder, which comprises a rotor and a stator or a rotor and a counter-rotor, to transfer torque from the rotor by a magnetic force, electrodynamically, by a fluid friction or a mechanical friction, whereas the torque is transferred or the heat is discharged from the retarder via a working medium;
1.2 having an expansion machine (6) operated by fluid or steam acting as a working medium, by means of which the mechanical driving power can be fed into the drive train;
**characterised in that**
1.3 the working medium of the retarder (1) is simultaneously the working medium of the expansion machine (6) and is guided in such a way through the expansion machine (6), that the heat amount introduced into the working medium in the retarder (1) is converted into mechanical energy in the expansion machine (6), or
1.4 the retarder (1) and the expansion machine (6) each comprise their own working medium circuit, whereas the working medium circuits are separated from each other in terms of working medium supply, but are however in a heat-transmitting connection relative to one another, inasmuch as a heat exchanger (7) is provided, through which the working medium of the retarder (1) and the working medium of the expansion machine (6) are guided, in order to convert the heat amount introduced into the working medium in the retarder (1) into mechanical energy in the expansion machine (6); whereas
1.5 an accumulator for accumulating heated working medium is arranged in the working medium circuit of the expansion machine (6).

2. The vehicle drive train according to claim 1, **characterised in that** the accumulator is heated.

3. The vehicle drive train according to one of claims 1 or 2, **characterised in that** the accumulator is thermally insulated.

4. The vehicle drive train according to one of claims 1 to 3, **characterised in that** the working medium is in steam form in the accumulator.

5. The vehicle drive train according to one of claims 1 to 4, **characterised in that** the expansion machine (6) is designed as a turbine, a screwing machine or a piston machine.

## Revendications

1. Train d'entraînement de véhicule, en particulier pour camion ou véhicule sur rails,
1.1 comprenant un retardateur hydrodynamique (1), présentant un rotor (2) et un stator (3) et un rotor (2) et un contre-rotor (4), qui forment ensemble une chambre de travail (5), dans laquelle un écoulement circulaire de fluide de travail est réglable, pour transférer le couple de rotation du rotor (2) hydrodynamiquement au stator (3) ou au contre-rotor (4), ou
comprenant un retardateur hydrodynamique, présentant un rotor et un stator ou bien un rotor et un contre-rotor, pour transférer le couple de rotation du rotor par force magnétique, par effet électrodynamique, par un frottement fluide ou frottement mécanique, où la transmission de couple de rotation ou une décharge thermique partant du retardateur fait appel au fluide de travail ;
1.2 équipé d'un moteur à expansion (6) dans lequel le fluide ou la vapeur fait office de fluide de travail pour assurer son entraînement, moteur à l'aide duquel une puissance d'entraînement mécanique peut être injectée dans le train d'entraînement ;
**caractérisé en ce que**
1.3 **caractérisé en ce que** le fluide de travail du retardateur (1) est en même temps le fluide de travail du moteur à expansion (6) et est acheminé à travers le moteur à expansion (6) de telle sorte que la quantité thermique injectée dans le fluide de travail dans le retardateur (1) est convertie en énergie mécanique dans le moteur à expansion (6), ou bien
1.4 **en ce que** le retardateur (1) et le moteur à expansion (6) présentent respectivement leur propre circuit de fluide de travail, où les circuits de fluide de travail sont séparés les uns des autres en termes d'acheminement du fluide de travail, tout en présentant ensemble une liaison caloporteuse, dans la mesure où un échangeur thermique (7) est prévu, à travers lequel le fluide de travail du retardateur (1) et le fluide de travail du moteur à expansion (6) sont acheminés, pour convertir la quantité thermique injectée dans le fluide de travail dans le retardateur (1), en énergie mécanique dans le moteur à expansion (6), où
1.5 un accumulateur permettant d'accumuler du fluide de travail chauffé, dans le circuit de fluide de travail du moteur à expansion (6).

2. Train d'entraînement de véhicule automobile selon la revendication 1, **caractérisé en ce que** l'accumulateur est chauffé.

3. Train d'entraînement de véhicule selon l'une quelconque des revendications 1 ou 2, **caractérisé en ce que** l'accumulateur est isolé thermiquement.

4. Train d'entraînement de véhicule selon l'une quelconque des revendications 1 à 3, **caractérisé en ce que** le fluide de travail dans l'accumulateur est sous forme de vapeur.

5. Train d'entraînement de véhicule selon l'une quelconque des revendications 1 à 4, **caractérisé en ce que** le moteur à expansion (6) est conçu comme turbine, visseuse ou machine à piston.
